# EUROPÄISCHE PATENTANMELDUNG

(11) **EP 3 767 292 A1**
(43) Veröffentlichungstag der Anmeldung: **20.01.2021**
(21) Anmeldenummer: 20185220.9
(22) Anmeldetag: 10.07.2020
(51) Int. Cl.: G01N 33/18, G01N 7/00, G01N 13/02, B60H 1/00, F25B 49/00, G01M 3/04, G01M 3/18, G01M 3/22, G01M 3/32

(54) **VERFAHREN UND VORRICHTUNG ZUR MESSUNG VON VERÄNDERUNGEN IN DER ZUSAMMENSETZUNG EINER FLÜSSIGKEIT IN EINEM KREISLAUF, INSBESONDERE EINEM WÄRMEPUMPENSYSTEM**

(30) Priorität: 17.07.2019 DE 102019119347
(71) Anmelder: Vaillant GmbH, 42859 Remscheid (DE)
(72) Erfinder: Wohlfeil, Arnold, 42799 Leichlingen (DE)
(74) Vertreter: Popp, Carsten

(57) **Zusammenfassung**

Die Erfindung betrifft ein Verfahren zur Messung von Veränderungen in der Zusammensetzung einer Flüssigkeit (2), die als Trägermedium in einem ersten geschlossenen Kreislauf (1) eines Wärmeübertragungssystems dient, wobei ein Gas (5) mit einem vorgebbaren Volumenstrom durch eine Leitung (6, 3) mit einer Öffnung (4) unter Bildung von einzelnen Blasen (14, 15) in die Flüssigkeit (2) geblasen und der Druck in der Leitung (6, 3) gemessen wird und wobei ein Maximum des Drucks während der Bildung der Blasen (14, 15) beobachtet wird, so dass von einer Veränderung des Maximums auf eine Veränderung der Zusammensetzung der Flüssigkeit (2) durch Eintritt von Kältemittel geschlossen werden kann. Die Erfindung betrifft auch eine Mess-Vorrichtung in einem ersten geschlossenen Kreislauf (1), wobei der erste geschlossene Kreislauf (1) einen Wärmetauscher (22) zum Wärmeaustausch mit einem zweiten Kreislauf (23) mit anderem Wärmeträgermedium, insbesondere Kältemittel, aufweist, wobei Veränderungen der Zusammensetzung auf eine Leckage zwischen beiden Kreisläufen (1,23) hinweisen, mit einer Leitung (6, 3) in dem ersten geschlossenen Kreislauf (1), die eine im Wesentlichen senkrecht nach unten zeigende Öffnung (4) unterhalb einer Oberfläche der Flüssigkeit (2) aufweist und durch die ein Gas (5) unter Bildung von einzelnen Blasen (14, 15) in die Flüssigkeit (2) einblasbar ist, und mit einer Druckmesseinrichtung (10) in oder an der Leitung (3, 6). Insbesondere in Wärmepumpensystemen können mit der Erfindung Heizkreisläufe auf das unerwünschte Eindringen von Kältemittel aus einem zweiten Kreislauf, insbesondere brennbarem Kältemittel wie R290, zuverlässig überwacht werden.

## Beschreibung

Die Erfindung liegt auf dem Gebiet der Wärmepumpensysteme, die insbesondere zur Beheizung oder Kühlung von Wohngebäuden und/oder zur Warmwasserbereitung benutzt werden. Solche Wärmepumpensysteme benötigen zwei oder mehr Kreisläufe, von denen mindestens ein erster ein geschlossener Kreislauf ist, der zumindest zum Teil im Inneren eines Gebäudes liegt und typischerweise im Wesentlichen mit Wasser oder Sole als Wärmeträgermedium betrieben wird. Über einen Wärmetauscher findet ein Wärmeaustausch mit einem zweiten Kreislauf statt, der typischerweise mit einem Kältemittel betrieben wird. Bevorzugt werden natürliche Kältemittel eingesetzt, wobei es sich um brennbare Stoffe handeln kann. Ein solches Kältemittel ist beispielsweise unter der Bezeichnung R290 bekannt. Häufig werden Alkane, zu denen beispielsweise auch Propan gehört, als Kältemittel eingesetzt, da sie geeignete Eigenschaften bezüglich der Abhängigkeit ihrer Siedetemperatur vom Druck und der Verdampfungswärme haben. Es können aber auch künstliche Kältemittel (auch nicht brennbare) eingesetzt werden.

Bei Wärmetauschern zwischen verschiedenen Wärmeträgermedien, die möglicherweise auch noch unter unterschiedlichen Drücken vorliegen, ist es besonders wichtig, eventuelle Leckagen feststellen zu können. Insbesondere im Fall von Wärmepumpensystemen ist es wünschenswert, frühzeitig auch geringe Leckagen feststellen zu können, insbesondere wenn es sich um das Eindringen von brennbarem Kältemittel in einen geschlossenen Kreislauf (mit z. B. Wasser oder Sole als Wärmeträgermedium), der auch im Inneren eines Gebäudes verläuft, handelt. Selbst geschlossene Kreisläufe sind nicht immer vollständig gasdicht gegenüber ihrer Umgebung oder weisen sogar Entgasungseinrichtungen auf. Da das Eindringen von brennbaren Gasen in Gebäude aus Sicherheitsgründen grundsätzlich vermieden werden soll, ist es wichtig, das unerwünschte Eindringen von Kältemittel aus einem zweiten Kreislauf in einen ersten Kreislauf feststellen zu können.

Nach dem Stand der Technik gibt es verschiedene chemische oder physikalische Verfahren, Leckagen in einem Wärmetauscher und/oder das Eindringen von Fremdstoffen in einen geschlossenen Kreislauf festzustellen, die jedoch sehr aufwändig und/oder langsam und/oder unzuverlässig sind.

Aufgabe der vorliegenden Erfindung ist es, ein Verfahren und eine Vorrichtung zu schaffen, die eine kostengünstige, schnelle und zuverlässige Feststellung von Änderungen in der Zusammensetzung eines flüssigen Wärmeträgermediums ermöglichen, insbesondere das Eindringen von brennbarem Kältemittel in einen Wasser- oder Solekreislauf erkennen können.

Zur Lösung dieser Aufgabe dienen ein Verfahren, eine Vorrichtung sowie ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit den Figuren, veranschaulicht die Erfindung und gibt weitere Ausführungsbeispiele an.

Die Erfindung macht sich die Abhängigkeit der (dynamischen) Oberflächenspannung bzw. der Grenzflächenspannung einer Flüssigkeit gegenüber einem Gas von ihrer Zusammensetzung zu Nutze. Schon seit Langem ist in der Physik das Phänomen der Grenzflächenspannung zwischen einer Flüssigkeit und einem Gas bekannt, wobei im Folgenden nur von Oberflächenspannung der Flüssigkeit gesprochen wird, da der Einfluss der in Frage kommenden unterschiedlichen Gase auf die beschriebenen Effekte vernachlässigbar klein ist. Aus der Grundlagenphysik ist bekannt (und wird beispielsweise bei der Beobachtung von Seifenblasen sehr anschaulich), dass bei Ausbildung einer Gasblase an einer Öffnung in einer Flüssigkeit kein konstanter Druck auftritt, sondern ein charakteristischer Druckverlauf, wobei der Druck anfangs klein ist, dann ein Maximum erreicht, wenn die Form der Blase einer Halbkugel vor der Öffnung (jedenfalls bei einer kreisrunden Öffnung) entspricht, und schließlich wieder abnimmt, bis die Blase sich ablöst. Ein darauf basierendes Messprinzip ist beispielsweise in der DE 20 2004 007 261 U1 oder der DE 1 975 529 C1 beschrieben. Das Maximum des Druckes ist daher einerseits von der Geometrie der Versuchsanordnung und andererseits von der Oberflächenspannung der Flüssigkeit abhängig. Solange diese beiden unverändert bleiben, ist auch das Druckmaximum bei jeder sich bildenden Blase konstant. Ändert sich jedoch die Zusammensetzung der Flüssigkeit, so ändert sich im Allgemeinen auch die (dynamische) Oberflächenspannung und damit das Maximum. Dies gilt insbesondere bei der hier betrachteten Anwendung, bei der Beimischungen von (brennbarem) Kältemittel in einem ursprünglich reinen Wärmeträgermedium erkannt werden sollen. Gerade Alkane, wie sie oft als Kältemittel verwendet werden, sind in Wasser schwer löslich und haben selbst in geringer Konzentration die Neigung, die Lösung über eine neu gebildete Oberfläche zu verlassen (insbesondere weil der Partialdruck des Kältemittels in der neu gebildeten Gasphase null ist), was eine Auswirkung auf die Oberflächenspannung hat. Dabei kann es zwar sein, dass es nicht sofort zu einer gleichmäßigen Verteilung eventuell in einen Wasser- oder Solekreislauf eindringenden Kältemittels kommt, jedoch im Vergleich zu anderen Messverfahren wird sich relativ schnell eine Änderung der Oberflächenspannung einstellen. Um genaue Messungen durchführen zu können, ist es hilfreich, diese im Wesentlichen bei ruhender Flüssigkeit oder in einem strömungsmäßig beruhigten Volumen durchzuführen.

Mit diesen Grundlagen löst die vorliegende Erfindung die Aufgabe durch ein Verfahren zur Messung von Veränderungen in der Zusammensetzung einer Flüssigkeit, die als Trägermedium in einem ersten geschlossenen Kreislauf eines Wärmeübertragungssystems dient, wobei ein Gas mit einem vorgebbaren Volumenstrom durch eine Leitung mit einer Öffnung unter Bildung von einzelnen Blasen in die Flüssigkeit geblasen und der Druck in der Leitung gemessen wird und wobei ein Maximum des Drucks während der Bildung der Blasen beobachtet wird, so dass von einer Veränderung des Maximums auf eine Veränderung der Zusammensetzung der Flüssigkeit durch Eintritt von Kältemittel geschlossen werden kann.

Die Flüssigkeit ist insbesondere Wasser oder Sole, die als Trägermedium in einem geschlossenen Kreislauf eines Wärmeübertragungssystems, welches insbesondere ein Teil eines Wärmepumpensystems sein kann, besonders geeignet sind.

In einer bevorzugten Anwendung der Erfindung tauscht der erste geschlossene Kreislauf (1) über einen Wärmetauscher (22) Wärme mit einem zweiten Kreislauf (23) aus, der mit einem Kältemittel betrieben wird.

Bevorzugt wird als Gas Luft oder ein Inertgas eingesetzt. Am einfachsten ist der Einsatz von Luft zur Erzeugung der Blasen, wozu beispielsweise ein Verdichter eingesetzt werden kann. Wichtig ist dabei, dass der Verdichter selbst keine Druckpulsationen erzeugt, die die Messung verfälschen könnten. Dies kann durch einen Pufferspeicher oder eine Turbopumpe erreicht werden. Ansonsten, insbesondere wenn ein Inertgas, insbesondere Stickstoff, zur Blasenerzeugung eingesetzt werden soll, wird ein Druckspeicher eingesetzt, welcher über ein Ventil die Messvorrichtung speist.

Bevorzugt wird die Messung in einem im Wesentlichen ruhenden Bereich der Flüssigkeit durchgeführt, indem entweder die Messung bei abgeschaltetem Kreislauf oder in einem geeigneten beruhigten Volumen durchgeführt wird.

Bei einer bevorzugten Ausführungsform wird das Gas durch eine im Wesentlichen senkrecht nach unten mit einer Öffnung versehene Kapillare unterhalb einer Oberfläche der Flüssigkeit geblasen. In einem geschlossenen Kreislauf gibt es nicht unbedingt eine definierte Oberfläche des Wärmeträgermediums. Jedenfalls aber sollte die Kapillare (eine dünne Röhre von 0,1 bis 10 mm [Millimeter] Durchmesser, vorzugsweise 0,2 bis 0,4 5 mm) so innerhalb der Flüssigkeit enden, dass sich eine Blase ungestört ausbilden kann, wobei bevorzugt die Öffnung kreisförmig sein und ihr Umfang waagerecht liegen sollte. Mit einer solchen Anordnung erzielt man die genauesten Ergebnisse, wobei aber auch bei Abweichungen von dieser Geometrie noch Messungen möglich sind. Bei Wasser als Flüssigkeit ist eine hydrophobe Beschichtung der Innenseite der Kapillare vorteilhaft.

Es wird bevorzugt bei einer Messung so viel Gas pro Zeiteinheit eingeblasen, dass sich alle 0,001 bis 100 s [Sekunden], vorzugsweise alle 0,01 bis 60 s eine Blase bildet und von der Öffnung ablöst. Bei Wasser als Flüssigkeit muss eine Blasenbildung theoretisch jedenfalls länger als 0,001 s dauern, damit sich annähernd ein zur Messung erforderliches Gleichgewicht einstellen kann. Solche Messungen können kontinuierlich oder in geeigneten Abständen durchgeführt werden. Um das eingeblasene Gas schnell wieder aus dem Kreislauf zu entfernen, kann die Messung gegebenenfalls vor einem möglicherweise ohnehin vorhandenen Luftabscheider durchgeführt werden.

Bei Änderung des Maximums des Druckes um mehr als einen vorgebbaren Wert (Schwellwert) wird bei einer bevorzugten Ausführungsform ein Alarm ausgelöst und/oder ein mit der Flüssigkeit betriebenes System abgeschaltet. Auf diese Weise können negative Folgen einer Leckage vermindert bzw. sicher beherrscht werden.

Eine erfindungsgemäße Vorrichtung zur Messung von Veränderungen in der Zusammensetzung einer Flüssigkeit in einem ersten geschlossenen Kreislauf, wobei der erste geschlossene Kreislauf einen Wärmetauscher zum Wärmeaustausch mit einem zweiten Kreislauf aufweist und wobei in beiden Kreisläufen unterschiedliche Wärmeträgermedien vorhanden sind, wobei die Veränderungen der Zusammensetzung auf eine Leckage zwischen dem ersten und dem zweiten Kreislauf hinweisen, weist eine Leitung in dem ersten Kreislauf mit einer im Wesentlichen senkrecht nach unten zeigenden Öffnung unterhalb einer Oberfläche der Flüssigkeit auf, durch die ein Gas unter Bildung von einzelnen Blasen in die Flüssigkeit einblasbar ist, und mit einer Druckmesseinrichtung in oder an der Leitung. Mit dieser Vorrichtung kann mit geringem Aufwand ein geschlossener Kreislauf auf das Eindringen von Fremdstoffen, insbesondere brennbarem Kältemittel, überwacht werden.

Bevorzugt ist die Druckmesseinrichtung mit einer Auswerteelektronik verbunden, die gemessene Druckwerte auswertet, für einzelne Blasen während ihrer Entstehung das jeweilige Maximum des Druckes ermittelt und bei Veränderungen des Maximums einen Alarmgeber auslöst und/oder ein mit der Flüssigkeit betriebenes System abschaltet.

Bevorzugt gehören die beiden Kreisläufe zu einem Wärmepumpensystem, und der erste Kreislauf ist zumindest zum Teil in einem Gebäude angeordnet.

Besonders bevorzugt ist das Wärmeträgermedium im ersten geschlossenen Kreislauf im Wesentlichen Wasser oder Sole, das im zweiten Kreislauf im Wesentlichen ein brennbares Kältemittel, insbesondere R290.

Um die beschriebenen Effekte zu vergrößern, kann dem Wärmeträgermedium im ersten und/oder im zweiten Kreislauf eine oberflächenaktive Substanz beigefügt sein, die bei einer Mischung der beiden Medien seine Wirkung entfaltet. Das Kältemittel kann sich an einen unpolaren Anteil der oberflächenaktiven Substanz anlagern, und wird so an eine neu entstehende Oberfläche transportiert. Dies vergrößert den Oberflächeneffekt und damit die Nachweisbarkeit von Leckagen.

Die vorliegende Erfindung betrifft auch ein Computerprogrammprodukt, umfassend Befehle, die bewirken, dass die hier vorgeschlagene Vorrichtung ein hier erläutertes Verfahren ausführt. Mit einem solchen Computerprogrammprodukt, welches bevorzugt in einer Auswerte-Elektronik zum Einsatz kommt, lässt sich die beschriebene Messung automatisiert durchführen und auswerten sowie ggf. ein Alarm oder eine Abschaltung auslösen, so dass jederzeit ein sicherer Betrieb des Systems möglich ist.

Ein schematisches Ausführungsbeispiel der Erfindung, auf das diese jedoch nicht beschränkt ist, und die Funktionsweise des erfindungsgemäßen Verfahrens werden nun anhand der Zeichnung detailliert erläutert. Es zeigt:

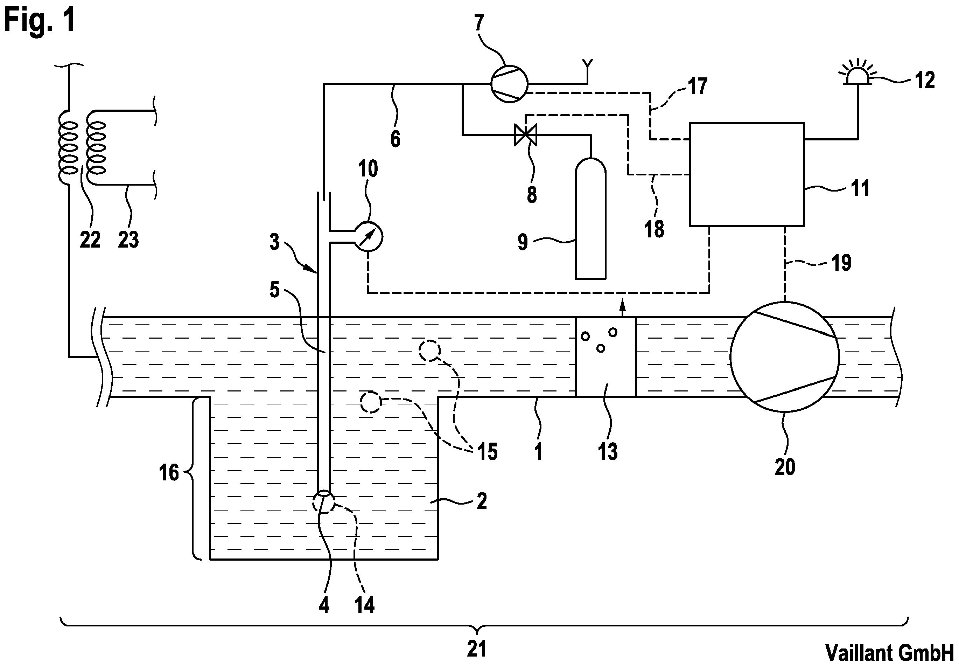

- Fig. 1:: schematisch eine Messanordnung gemäß der vorliegenden Erfindung als Teil eines geschlossenen Flüssigkeitskreislaufs.

Figur 1 zeigt schematisch ein Ausführungsbeispiel einer hier vorgeschlagenen Vorrichtung. Ein geschlossener Flüssigkeitskreislauf 1, insbesondere Teil eines Wärmepumpensystems, ist gefüllt mit einer Flüssigkeit 2 als Wärmeträgermedium und weist einen strömungsberuhigten Abschnitt 16 auf. In diesen Abschnitt ragt eine Kapillare 3 mit einer Öffnung 4 hinein, und zwar so, dass die Öffnung 4 im Wesentlichen nach unten zeigt. Durch die Kapillare 3 wird mittels einer Leitung 6 ein Gas 5 eingeblasen. Dies Gas kann Luft sein, welche von einem Kompressor 7 gefördert wird, oder ein Inertgas, welches aus einem Gasbehälter 9 über ein Ventil 8 geliefert wird. Bei einer Messung wird gerade so viel Gas 5 pro Zeiteinheit eingeblasen, dass sich an der Öffnung 4 einzelne Blasen 14 bilden, die sich nacheinander ablösen und als abgelöste Blasen 15 in dem Kreislauf 1 mitgeführt werden, bis sie ggf. an einem Gasabscheider 13 abgeschieden werden. Der Kreislauf wird von einer Umwälzpumpe 20 in Betrieb gehalten. Der Druck in der Kapillare 3 (der dem Druck in der Blase 14 entspricht, wird mittels einer Druckmessvorrichtung 10 gemessen und von einer Auswerte-Elektronik 11 ausgewertet. Insbesondere wird dort der bei jeder Blasenbildung auftretende Maximaldruck gemessen und beobachtet. Ändert sich dieser Maximaldruck, so wird daraus auf eine unerwünschte Veränderung der Zusammensetzung der Flüssigkeit 2 geschlossen, insbesondere auf das Eindringen von brennbarem Kältemittel in den geschlossenen Kreislauf 1, was die Abschaltung des der Umwälzpumpe 20 über eine Abschaltleitung 19 und/oder das Auslösen eines Alarmgeber 12 zur Folge hat, sobald ein vorgebbarer Messbereich verlassen wird. Die Messung kann ebenfalls von der Auswerte-Elektronik 11 veranlasst werden, indem entweder die Pumpe 7 über eine Pumpen-Steuerleitung 17 oder das Ventil 8 über eine Ventil-Steuerleitung 18 angesteuert werden. Der beschriebene geschlossene Kreislauf 1 ist Teil eines Wärmeübertragungssystems 21, welches mindestens einen Wärmetauscher 22 enthält, der Wärme aus einem zweiten Kreislauf 23 überträgt, insbesondere einem zweiten Kreislauf 23 mit brennbarem Kältemittel als Wärmeträgermedium und höherem Betriebsdruck als der erste Kreislauf 1.

Die vorliegende Erfindung erlaubt es, in einem Wärmepumpensystem sicher zu detektieren, wenn Kältemittel, insbesondere brennbares Kältemittel, in einen geschlossenen Kreislauf in einem Gebäude gelangt, wo dies aus Sicherheitsgründen nicht vorhanden sein soll.

### Bezugszeichenliste

- 1: geschlossener Kreislauf
- 2: Flüssigkeit, Wärmeträgermedium
- 3: Kapillare
- 4: Öffnung
- 5: Luft / Inertgas / Gas
- 6: Leitung
- 7: Kompressor
- 8: Ventil
- 9: Gasbehälter
- 10: Druckmessvorrichtung
- 11: Auswerte-Elektronik
- 12: Alarmgeber
- 13: Gasabscheider
- 14: frische Gasblase
- 15: abgelöste Gasblasen
- 16: ruhender Bereich
- 17: Pumpen-Steuerleitung
- 18: Ventil-Steuerleitung
- 19: Abschaltleitung
- 20: Umwälzpumpe
- 21: Wärmeübertragungssystem
- 22: Wärmetauscher
- 23: zweiter Kreislauf

## Patentansprüche

1. Verfahren zur Messung von Veränderungen in der Zusammensetzung einer Flüssigkeit (2), die als Trägermedium in einem ersten geschlossenen Kreislauf (1) eines Wärmeübertragungssystems dient, wobei ein Gas (5) mit einem vorgebbaren Volumenstrom durch eine Leitung (6, 3) mit einer Öffnung (4) unter Bildung von einzelnen Blasen (14, 15) in die Flüssigkeit (2) geblasen und der Druck in der Leitung (6, 3) gemessen wird und wobei ein Maximum des Drucks während der Bildung der Blasen (14, 15) beobachtet wird und wobei von einer Veränderung des Maximums auf eine Veränderung der Zusammensetzung der Flüssigkeit (2) durch Eintritt von Kältemittel geschlossen wird.

2. Verfahren nach Anspruch 1, wobei als Flüssigkeit Wasser oder Sole verwendet wird.

3. Verfahren nach Anspruch 1 oder 2, wobei der geschlossene Kreislauf (1) über einen Wärmetauscher (22) Wärme mit einem zweiten Kreislauf (23) austauscht, der mit einem Kältemittel betrieben wird.

4. Verfahren nach einem der vorhergehenden Ansprüche, wobei das Gas (5) Luft oder ein Inertgas ist.

5. Verfahren nach einem der vorhergehenden Ansprüche, wobei die Messung in einem im Wesentlichen ruhenden Bereich (16) der Flüssigkeit (2) durchgeführt wird.

6. Verfahren nach einem der vorhergehenden Ansprüche, wobei das Gas (5) durch eine im Wesentlichen senkrecht nach unten mit einer Öffnung (4) versehene Kapillare (3) unterhalb einer Oberfläche der Flüssigkeit (2) geblasen wird.

7. Verfahren nach einem der vorhergehenden Ansprüche, wobei so viel Gas (5) pro Zeiteinheit eingeblasen wird, dass sich alle 1 bis 10 s [Sekunden] eine Blase (14, 15) bildet und von der Öffnung (4) ablöst.

8. Verfahren nach einem der vorhergehenden Ansprüche, wobei bei Änderung des Maximums des Druckes um mehr als einen vorgebbaren Wert ein Alarm ausgelöst und/oder ein mit der Flüssigkeit (2) betriebenes System abgeschaltet wird.

9. Vorrichtung zur Messung von Veränderungen in der Zusammensetzung einer Flüssigkeit (2) in einem ersten geschlossenen Kreislauf (1), wobei der erste geschlossene Kreislauf (1) einen Wärmetauscher (22) zum Wärmeaustausch mit einem zweiten Kreislauf (23) aufweist und wobei in beiden Kreisläufen (1, 23) unterschiedliche Wärmeträgermedien vorhanden sind, wobei die Veränderungen der Zusammensetzung auf eine Leckage zwischen dem ersten (1) und dem zweiten Kreislauf (23) hinweisen, mit einer Leitung (3, 6) in dem ersten Kreislauf (1), die eine im Wesentlichen senkrecht nach unten zeigende Öffnung (4) unterhalb einer Oberfläche der Flüssigkeit (2) aufweist und durch die ein Gas (5) unter Bildung von einzelnen Blasen (14, 15) in die Flüssigkeit (2) einblasbar ist, und mit einer Druckmesseinrichtung (10) in oder an der Leitung (3, 6).

10. Vorrichtung nach Anspruch 9, wobei die Druckmesseinrichtung (10) mit einer Auswerteelektronik (11) verbunden ist, die gemessene Druckwerte auswertet, für einzelne Blasen (14) während ihrer Entstehung das jeweilige Maximum des Druckes ermittelt und bei Veränderungen des Maximums einen Alarmgeber (12) auslöst und/oder ein mit der Flüssigkeit (2) betriebenes System (21) abschaltet.

11. Vorrichtung nach einem der Ansprüche 9 oder 10, wobei die beiden Kreisläufe (1, 23) zu einem Wärmepumpensystem gehören und der erste Kreislauf (1) zumindest zum Teil in einem Gebäude angeordnet ist.

12. Vorrichtung nach Anspruch 11, wobei das Wärmeträgermedium im ersten geschlossenen Kreislauf (1) im Wesentlichen Wasser oder Sole ist, das im zweiten Kreislauf (23) im Wesentlichen ein brennbares Kältemittel.

13. Vorrichtung nach Anspruch 12, wobei das Wärmeträgermedium im ersten (1) und/oder im zweiten (2) Kreislauf mindestens eine Beimischung einer oberflächenaktiven Substanz enthält.

14. Computerprogrammprodukt, umfassend Befehle, die bewirken, dass die Vorrichtung nach Anspruch 9 oder 10 das Verfahren nach Anspruch 1 ausführt.
